(19) Europäisches Patentamt
European Patent Office
Office européen des brevets

(11) EP 0 548 565 B1

(12) **EUROPEAN PATENT SPECIFICATION**

(45) Date of publication and mention of the grant of the patent:
**05.02.1997 Bulletin 1997/06**

(51) Int Cl.[6]: **C08L 43/04**, C08L 51/06

(21) Application number: **92119978.2**

(22) Date of filing: **24.11.1992**

# (54) Water-crosslinkable polyolefin piping for weather-resistant crosslinked polyolefin piping

Durch wasserhärtbare Polyolefine Wasserrohre für witterungsbeständige vernetzte polyolefine Wasserrohre

Tuyau d'eau en polyoléfine réticulable à l'humidité pour conduite d'eau de polyoléfine réticulée résistant aux intempéries

(84) Designated Contracting States:
**CH DE DK FR GB LI SE**

(30) Priority: **12.12.1991 JP 328713/91**

(43) Date of publication of application:
**30.06.1993 Bulletin 1993/26**

(73) Proprietor: **MITSUBISHI KAGAKU SANSHI CORPORATION**
**Tokyo (JP)**

(72) Inventors:
- **Ohnishi, Shunichi, c/o Mitsubishi Petrochemical Co Yokkaichi-shi, Mie (JP)**
- **Fukuda, Takeo, c/o Mitsubishi Yuka Ind. Prod. Corp Inashiki-gun, Ibaraki (JP)**

(74) Representative:
**Hansen, Bernd, Dr. Dipl.-Chem. et al**
**Hoffmann, Eitle & Partner**
**Patent- und Rechtsanwälte,**
**Postfach 81 04 20**
**81904 München (DE)**

(56) References cited:
**EP-A- 0 063 544**
**EP-A- 0 250 076**
**EP-A- 0 441 746**
**US-A- 4 349 603**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 548 565 B1

## Description

### FIELD OF THE INVENTION

This invention relates to water-crosslinkable polyolefin piping which provides a crosslinked polyolefin pipe having excellent weather resistance and useful in water supply and drainage piping.

### BACKGROUND OF THE INVENTION

Copper pipes have been used as main piping for connecting an indoor heating appliance part and an outdoor part. However, a copper pipe has poor solderability and the applied solder often falls off during plumbing. Further, it undergoes corrosion or cracking at a bend during long-term use, always entertaining a fear of leakage.

With the current spread of room heating systems, it has been demanded to develop piping for connecting an indoor part and an outdoor part which is free from the above-mentioned problems associated with copper piping.

Piping made of a crosslinked polyolefin is excellent in anticorrosion, heat resistance, mechanical strength, and environmental stress cracking resistance, and is regarded promising as piping for an underfloor heating system (such as radiator pipes and connecting pipes), water supply piping, and hot water piping.

Processes for obtaining crosslinked polyolefins include a process of using a chemical crosslinking agent and a process of using electron rays. Lately, a so-called water-crosslinking process has been proposed as disclosed in JP-B-48-1711 (the term "JP-B" as used herein means an "examined published Japanese patent application")(which corresponds to U.S. Patent 3,646,155), which comprises grafting an ethylenically unsaturated silane compound to a polyolefin in the presence of a radical generator to obtain a silane-modified polyolefin (water-crosslinkable polyolefin) and exposing the silane-modified polyolefin to an atmosphere containing water in the presence of a catalyst for silanol condensation to induce crosslinking. As compared with the conventional crosslinking techniques using a chemical crosslinking agent or electron rays, the water-crosslinking technique has been attracting attention because of its industrial advantages, such as markedly reduced cost of equipment for crosslinking and relative ease of operation of crosslinking, and has been given many studies for use in various piping fields. For example, the details for obtaining water-crosslinkable polyolefin piping are described in JP-B-61-37513, JP-B-63-58090, and JP-B-1-14857.

Where the water-crosslinked polyolefin pipe is used for connecting an indoor part and an outdoor part of a room heating system, the outdoor piping will be exposed to sunlight while having in the inside thereof hot water of about 80°C. Exposure to sunlight for a long time would cause cracks due to photo-deterioration, leading to leakage. To avoid this, the outdoor piping is usually protected with a covering or taped up for protection against sunlight. Since it is difficult to fit a covering onto the pipe end connected to the outdoor part, that part of the pipe is usually protected by taping. However, the tape is apt to peel off with time or undergo photo-deterioration itself, and, as a result, the pipe end will be exposed, undergo photo-deterioration, and finally leak.

Taking the above problem into consideration, the latest studies have been directed to endow water-crosslinked polyolefin piping itself with weather resistance. A means generally taken for imparting weather resistance to the polyolefin piping is internal addition of a photostabilizer or an ultraviolet absorbent to a polyolefin. However, these additives have a relatively low molecular weight and, therefore, are easily lost by vaporization or washing with running water, failing to retain sufficient weather resistance for an extended period of time.

EP-A-0063544 discloses $\alpha$-olefin copolymers containing steric hindered amino side groups; these copolymers are described as being useful as light- and heatstabilizers for organic materials.

EP-A-052076 discloses an olefin polymer composition having an improved resistance to deterioration in presence of chlorinated and non-chlorinated water and having improved resistance to temperatures in the range of 0 °C to 110 °C, and consisting of a blend of (a) an isotactic $\alpha$-olefin polymer, (b) a hindered amine UV-stabilizer; (c) a hindered phenolic thermal stabilizer and optionally (d) a nucleating agent, (e) a pigment and/or (f) a filler.

### SUMMARY OF THE INVENTION

An object of the present invention is to provide water-crosslinkable polyolefin piping which provides crosslinked polyolefin pipes capable of retaining weather resistance for a prolonged period of time.

As a result of extensive investigations, the present inventors have found that the above object of the present invention can be accomplished by adding to a water-crosslinkable polyolefin an ethylene copolymer comprising ethylene and a specific vinyl compound having a hindered amine. The present invention has been completed based on this finding.

Subject matter of the present invention is a water-crosslinkable polyolefin piping according to Claim 1.

Preferred embodiments thereof are subject matter of Claims 2 to 6.

DETAILED DESCRIPTION OF THE INVENTION

The water-crosslinkable polyolefin as component (A) is a silane-modified polyolefin which can be obtained by, for example, grafting an ethylenically unsaturated silane compound to a polyolefin in the presence of a radical generator and which can be crosslinked upon being exposed to an atmosphere containing water in the presence of a catalyst for silanol condensation.

The polyolefin to be silane-modified includes polyethylene, polypropylene, an ethylene-vinyl acetate copolymer, an ethylene-propylene copolymer rubber, an ethylenepropylene-diene terpolymer rubber, and chlorinated polyethylene.

The radical generator to be used for silane modification includes those capable of generating free radical sites in the polyolefin under grafting conditions and having a half-life of less than 6 minutes at a grafting temperature. All the compounds disclosed as a radical generator in the aforementioned publications (e.g., JP-B-48-1711). Typical radical generators include organic peroxides, e.g., dicumyl peroxide, t-butyl peroxide, t-butyl peroxyoctate, and benzoyl peroxide, and azo compounds, e.g., azoisobutyronitrile and methyl azoisobutyrate. The radical generator is used in an amount usually of from 0.01 to 5 parts by weight, and preferably of from 0.01 to 2 parts by weight, per 100 parts by weight of a polyolefin.

The ethylenically unsaturated silane compound which can be used for silane modification includes compounds represented by formula: $RSiR'_nY_{3-n}$, wherein R represents an ethylenically unsaturated hydrocarbon group or a hydrocarbonoxy group; R' represents an aliphatic saturated hydrocarbon group; Y represents a hydrolyzable organic group; and n represents 0, 1, or 2. More specifically, R is a vinyl group, an allyl group, an isopropenyl group, a butenyl group, a cyclohexenyl group, or a $\gamma$-(meth)acryloyloxypropyl group; R' is a methyl group, an ethyl group, a propyl group, a decyl group, or a phenyl group; and Y is a methoxy group, an ethoxy group, a formyloxy group, an acetoxy group, an propionyloxy group, an alkylamino group, or an arylamino group. Preferred of these compounds are those represented by formula: $CH_2=CHSi(OA)_3$, wherein A represents a hydrocarbon group having from 1 to 8 carbon atoms. Specific examples of such preferred silane compounds are vinyltrialkoxysilane compounds, e.g., vinyltrimethoxysilane and vinyltriethoxysilane, and vinyltriacetoxysilane.

The ethylenically unsaturated silane compound is used in an amount usually of from 0.1 to 15 parts by weight, and preferably of from 0.5 to 10 parts by weight, per 100 parts by weight of a polyolefin.

Silane modification can be carried out by grafting the above-mentioned silane compound to a polyolefin as described above. Silane-modified polyolefins may also be obtained as a copolymer of ethylene and the above-mentioned silane compound, as described in JP-B-62-23777 (which corresponds to U.S. Patent 4,413,066).

The silane-modified polyolefin is molded into piping by a usual molding techniques, generally extrusion. The resulting piping is then crosslinked by exposure to a water-containing atmosphere in the presence of a catalyst for silanol condensation.

Any of catalysts for accelerating dehydration condensation among silanol groups of silicone may be used. All the compounds disclosed in the aforementioned publications, e.g., JP-B-48-1711 can be used. Typical examples of silanol condensation catalysts are dibutyltin dilaurate, dibutyltin diacetate, dibutyltin dioctoate, stannous acetate, cobalt naphthenate, ethylamine, and dibutylamine.

The silanol condensation catalyst is used in an amount usually of from 0.001 to 10 parts by weight, and preferably of from 0.03 to 5 parts by weight, per 100 parts by weight of a silane-modified polyolefin.

The silanol condensation catalyst is usually used as dispersed in a silane-modified polyolefin before molding. It may also be employed as a solution or a dispersion to be coated on or impregnated in silane-modified polyolefin molded piping.

Exposure to a water atmosphere is effected by contacting the silane-modified polyolefin piping with water, either liquid or vapor, at room temperature to about 200°C, usually room temperature to about 100°C, for about 10 seconds to about 1 week, usually about 1 minute to 1 day.

From the standpoint of heat resistance, mechanical strength, and environmental stress cracking resistance, it is preferable to crosslink the silane-modified polyolefin piping so as to have a gel fraction of at least 30%, and particularly at least 40%.

The ethylene copolymer as component (B), which comprises an ethylene unit and a hindered amine-containing vinyl compound unit and has a melt flow rate (hereinafter abbreviated MFR) of from 0.1 to 200 g/10 min, is a copolymer comprising (a) an ethylene unit and (b) a unit derived from a vinyl compound represented by formula:

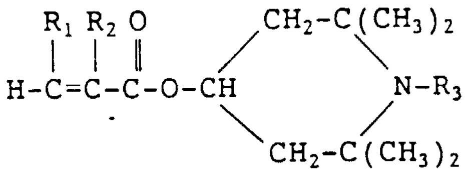

wherein $R_1$ and $R_2$ each represents a hydrogen atom or a methyl group; and $R_3$ represents a hydrogen atom or an alkyl group having from 1 to 4 carbon atoms,
in which the ratio of unit (b) to the sum of units (a) and (b) is less than 1 mol%, and the ratio of isolated unit (b) to the total unit (b) is 83% or more.

The vinyl compounds of the above formula are known and can be synthesized, for example, by the processes disclosed in JP-B-47-8539 and JP-A-48-65180 (the term "JP-A" as used herein means an unexamined published Japanese patent application"). Typical examples of the vinyl compounds of the above formula are shown below.

4-Acryloyloxy-2,2,6,6-tetramethylpiperidine
4-Acryloyloxy-1,2,2,6,6-pentamethylpiperidine
4-Acryloyloxy-1-ethyl-2,2,6,6-tetramethylpiperidine
4-Acryloyloxy-1-propyl-2,2,6,6-tetramethylpiperidine
4-Acryloyloxy-1-butyl-2,2,6,6-tetramethylpiperidine
4-Methacryloyloxy-2,2,6,6-tetramethylpiperidine
4-Methacryloyloxy-1,2,2,6,6-pentamethylpiperidine
4-Methacryloyloxy-1-ethyl-2,2,6,6-tetramethylpiperidine
4-Methacryloyloxy-1-butyl-2,2,6,6-tetramethylpiperidine
4-Crotonoyloxy-2,2,6,6-tetramethylpiperidine
4-Crotonoyloxy-1-propyl-2,2,6,6-tetramethylpiperidine

The most important feature of the above-described preferred ethylene copolymer consists in that unit (b) in an isolated form should be present in a ratio of at least 83% based on the total unit (b). If the ratio is less than 83%, the characteristic of the copolymer that high photostabilizing effect can be produced for the small content of unit (b) will not be fully manifested. The terminology "isolated unit (b)" or "unit (b) in an isolated form" as used herein means unit (b) which independently exists without being linked to another unit (b) in the copolymer main chain.

Existence of such isolated unit (b) in the copolymer main chain can be confirmed by a $^{13}$C-NMR analysis according to a known procedure as described, e.g., in KIKI BUNSEKI NO TEBIKI (1), pp. 53-56, Kagaku Dojin (1986), using, for example, a spectrometer "JNM-GSX 270" manufactured by Japan Electron Optics Laboratory Co., Ltd. Reported chemical shifts of polyethyl acrylate (see KOBUNSHI BUNSEKI Handbook, p. 969, Asakura Shoten (1985)) and an ethylene-hydroxyethyl acrylate copolymer (see Eur. Poly. J., Vol. 25, No. 4, pp. 411-418 (1989)) are utilized. The peak at 32.9 ppm (on a TMS standard) is assigned to the methylene group at the $\alpha$-position with respect to the branching point of an isolated vinyl monomer unit (b), and that at 35.7 ppm is assigned to the methylene group interposed between two connecting vinyl monomer units (b). The ratio of isolated unit (b) to total unit (b) in the copolymer can then be obtained from these two signals according to equation:

Ratio of Isolated Unit (b) = (Peak Area at 32.9 ppm)/(Peak Area at 32.9 ppm + Peak Area at 35.7 ppm)

The ethylene copolymer (B) should have an MFR ranging from 0.1 to 200 g/10 min as measured according to JIS K6760. A preferred MFR is from 0.5 to 20 g/10 min, and a more preferred MFR is from 1 to 5 g/10 min. If the MFR is less than 0.1 g/10 min; the copolymer has poor compatibility with a polyolefin and, when blended therewith, causes deterioration in appearance of piping, such as surface roughness or graininess. If it exceeds 200 g/10 min, bleeding or blooming occurs and, when blended with a polyolefin, causes a reduction in strength of the blend.

The content of the vinyl compound unit (b) having a hindered amine in its side chain in the above-described preferred ethylene copolymer is less than 1 mol%, preferably from 0.0005 to 0.85 mol%, and more preferably from 0.001 to 0.55 mol%, based on the sum of ethylene unit (a) and vinyl compound unit (b). The unit (b) content in the copolymer

is decided by known nitrogen analysis.

Because the hindered amine-containing vinyl compound has an excellent photostabilizing effect, a sufficient photostabilizing effect can be exercised with such a low content of 0.0005 mol% based on the total units (a) + (b). The upper limit of the hindered amine-containing vinyl compound in the copolymer is less than 1 mol%. Use of an ethylene copolymer having a higher vinyl compound content is nothing but bad economy.

With respect to the molecular weight distribution of the ethylene copolymer, the ethylene copolymer preferably has a Q value, a ratio of weight average molecular weight (Mw) to number average molecular weight (Mn) (Mw/Mn), of from 3 to 120, and particularly from 5 to 20, as decided from a calibration curve prepared on a polystyrene monodispersion by gel-permeation chromatography.

The ethylene copolymer comprising ethylene and the hindered amine-containing vinyl compound can be prepared by high-pressure radical copolymerization. For the details, Japanese Patent Application No. 192970/90 (which corresponds to JP-A-4-80215) may be referred to.

The content of the vinyl compound unit (b) in the resin composition comprising component (A) and component (B) is from 0.05 to 5% by weight, and preferably from 0.1 to 3% by weight. If it is less than 0.05% by weight, the effect of improving weather resistance is insubstantial. The effect will be saturated at the vinyl compound unit content exceeding 5% by weight.

The ethylene copolymer is incorporated into the polyolefin in such an amount that the vinyl compound unit content amounts to a range of from 0.05 to 5% by weight based on the resin composition. The ethylene copolymer may be added in any stage before conducting water-crosslinking. For example, it may be added to a polyolefin before silane modification, during silane modification, or after silane modification. Blending of the polyolefin and the ethylene copolymer may be carried out by melt-kneading at a temperature above the melting point of the polyolefin in, for example, an extruder or a Banbury mixer.

If desired, the water-crosslinkable polyolefin piping according to the present invention may contain additives, such as antioxidants, antistatic agents, ultraviolet absorbents, lubricants, and inorganic fillers.

The present invention is now illustrated in greater detail with reference to Examples, but it should be understood that the present invention is not deemed to be limited thereto. All the parts, percents, and ratios are by weight unless otherwise indicated.

EXAMPLES 1 TO 6 AND COMPARATIVE EXAMPLES 1 AND 2

To 100 parts of each polyolefin or mixed polyolefin shown in Table 1 below were added 2 parts of vinyltrimethoxysilane and 0.2 part of dicumyl peroxide, and the mixture was blended in a Henschel mixer. Each of the resulting blends was kneaded in an extruder (L/D=24) set at 200°C for an average retention time of 2 minutes and pelletized.

To the resulting silane-modified polyolefin was added an ethylene copolymer prepared as follows and a master batch containing 1 part of dibutyltin dilaurate at a weight ratio of 20:1 so that the resulting resin mixture had the composition shown in Table 1, and the mixture was kneaded in an extruder (diameter: 40 mm; L/D=24) at 200°C and extruded into a pipe having an outer diameter of 13 mm and a thickness of 2.0 mm as specified in JIS K6769. The pipe was immersed in hot water at 98°C for 24 hours to obtain a crosslinked pipe. The gel fraction of the crosslinked pipe is shown in Table 1.

The weather resistance of the resulting pipe was evaluated as follows.

A JIS No. 3 dumbbell specimen was punched out of the pipe. After accelerated weathering in a sunshine weatherometer (black panel temperature: 63°C, JIS B7753), the specimen was subjected to a tensile test to measure an elongation at break. The weatherometer exposure time with which the percent retention of elongation at break after exposure decreased to 50% was taken as a life against weathering. The elongation at break and retention of elongation at break were obtained from the following equations:

Elongation at break (%) =

[Distance between gages (mm) at break - Distance between gages (mm) before tensile test]/

Distance between gages (mm) before tensile test x 100

Retention of elongation at break (%) = Elongation at break after exposure/Elongation at break before exposure x 100

Preparation of Ethylene Copolymer:

Ethylene, 4-acryloyloxy-2,2,6,6-tetramethylpiperidine dissolved in ethyl acetate, and, as a catalyst, t-butyl peroxypivalate dissolved in n-hexane were continuously fed to a stirring autoclave type continuous reactor, and copolymerization was conducted at a temperature of 200°C and at a pressure of 2000 kg/cm$^2$. The resulting copolymer had an MFR of 2.7 g/10 min and a vinyl compound unit (4-acryloyloxy-2,2,6,6-tetramethylpiperidine) of 5.0%. The ratio of isolated vinyl compound unit in the total vinyl compound unit was 85% as determined by $^{13}$C-NMR analysis.

COMPARATIVE EXAMPLES 3 AND 4

A crosslinked polyolefin pipe was prepared in the same manner as in Example 1 or Example 4, except for using an ethylene copolymer prepared as follows. The gel fraction and results of a weathering test are shown in Table 1.

Preparation of Ethylene Copolymer:

Ten liters of pure anhydrous toluene were charged in a 50 ℓ-volume stirring autoclave type reactor. While stirring the toluene in a pure ethylene atmosphere, a solution of 2.1 kg of 4-acryloyloxy-2,2,6,6-tetramethylpiperidine and 20 g of $\alpha,\alpha'$-azoisobutyronitrile in 25 ℓ of extremely pure toluene was fed thereto over a period of 110 minutes to elevate the inner pressure up to 250 kg/cm$^2$ to conduct copolymerization. After that pressure was reached, the reaction was further continued for an additional period of 70 minutes while stirring the mixture at 110°C. The pressure was liberated, nitrogen introduced, the temperature dropped to room temperature in a nitrogen atmosphere, and the mixture poured into 800 ℓ of methanol, followed by filtration, washing, and drying to recover the copolymer produced. The resulting copolymer had an MFR of 300 g/10 min or more, a number average molecular weight of 4500, and a 4-acryloyloxy-2,2,6,6-tetramethylpiperidine unit content of 5.0%. The ratio of isolated vinyl compound unit in the total vinyl compound unit was 76% as determined by $^{13}$C-NMR analysis.

COMPARATIVE EXAMPLES 5 AND 6

A crosslinked polyolefin pipe was prepared in the same manner as in Example 1 or Example 4, except for replacing the ethylene copolymer with a commercially available hindered amine type photostabilizer. The gel fraction and the results of a weathering test are shown in Table 1.

TABLE 1

| | Example No. | | | | | | Comparative Example No. | | | | | |
|---|---|---|---|---|---|---|---|---|---|---|---|---|
| | 1 | 2 | 3 | 4 | 5 | 6 | 1 | 2 | 3 | 4 | 5 | 6 |
| **Composition (part):** | | | | | | | | | | | | |
| LLDPE[1)] | 100 | 100 | 100 | | 80 | 80 | 100 | | 100 | | 100 | |
| PP[2)] | | | | 100 | | | | 100 | | 100 | | 100 |
| EVA[3)] | | | | | 20 | | | | | | | |
| EPR[4)] | | | | | | 20 | | | | | | |
| Vinyltrimethoxy-silane | 2.0 | 2.0 | 2.0 | 2.0 | 2.0 | 2.0 | 2.0 | 2.0 | 2.0 | 2.0 | 2.0 | 2.0 |
| Dicumyl peroxide | 0.2 | 0.2 | 0.2 | 0.2 | 0.2 | 0.2 | 0.2 | 0.2 | 0.2 | 0.2 | 0.2 | 0.2 |
| Ethylene copolymer[5)] (Vinyl compound unit content) | 6 (0.3) | 2 (0.1) | 20 (1.0) | 6 (0.3) | 6 (0.3) | 6 (0.3) | 0.6 (0.03) | 0.6 (0.03) | | | | |
| Ethylene copolymer[6)] (Vinyl compound unit content) | | | | | | | | | 6 (0.3) | 6 (0.3) | | |
| Hindered amine type photostabilizer[7)] | | | | | | | | | | | 0.3 | 0.3 |
| Dibutyltin dilaurate | 0.05 | 0.05 | 0.05 | 0.05 | 0.05 | 0.05 | 0.05 | 0.05 | 0.05 | 0.05 | 0.05 | 0.05 |
| **Properties:** | | | | | | | | | | | | |
| Gel fraction (wt%) | 72 | 73 | 70 | 61 | 80 | 75 | 73 | 85 | 72 | 63 | 69 | 60 |
| Weather resistance (hrs) | 12000 | 6700 | 23200 | 9500 | 10500 | 9800 | 2300 | 1350 | 6200 | 3100 | 2150 | 1200 |

Note:
1): Linear low-density polyethylene; density: 0.93 $g/cm^3$; MFR: 3 g/10 min
2): Polypropylene; density: 0.90 $g/cm^3$; MFR: 1.5 g/10 min
3): Ethylene-vinyl acetate copolymer; vinyl acetate content: 10 wt%; density: 0.93 $g/cm^3$; MFR: 2 g/10 min
4): Ethylene-propylene copolymer rubber; propylene content: 26 wt%; density: 0.86 $g/cm^3$; Mooney viscosity ($ML_{1+4}$, 100°C): 24
5): Vinyl compound unit content: 0.7 mol%; isolated vinyl compound ratio: 85%; density: 0.93 $g/cm^3$; MFR: 2.7 g/10 min
6): Vinyl compound unit content: 0.7 mol%; isolated vinyl compound ratio: 76%; density: 0.93 $g/cm^3$; MFR: 300 g/10 min or more; Mn: 4500
7): Dimethyl succinate-1-(2-hydroxyethyl)-4-hydroxy-2,2,6,6-tetramethylpiperidine polycondensate; molecular weight: 3100 - 4000

As described and demonstrated above, the water-crosslinkable piping of the present invention obtained from the resin composition comprising a water-crosslinkable polyolefin and an ethylene copolymer comprising ethylene and a hindered amine-containing vinyl compound provides a crosslinked polyolefin pipe which is superior in weather resistance to that obtained from water-crosslinkable polyolefin piping containing a conventional photostabilizer.

While the invention has been described in detail and with reference to specific examples thereof, it will be apparent to one skilled in the art that various changes and modifications can be made therein without departing from the spirit and scope thereof.

## Claims

1. Water-crosslinkable polyolefin piping obtainable by molding a resin composition comprising (A) a water-crosslinkable polyolefin and (B) a ethylene copolymer comprising an ethylene unit and a hindered amine-containing vinyl compound unit and having a melt flow rate of from 0.1 to 200 g/10 min, said vinyl compound unit being present in an amount of from 0.05 to 5 % by weight based on said resin composition, characterized in that said ethylene compolymer (B) is a copolymer comprising (a) an ethylene unit and (b) a unit derived from a vinyl compound represented by formula:

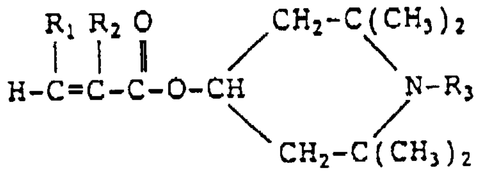

wherein R1 and R2 each represents a hydrogen atom or a methyl group; and R3 represents a hydrogen atom or an alkyl group having from 1 to 4 carbon atoms, in which the ratio of unit (b) to the sum of units (a) and (b) is less than 1 mol %, and the ratio of isolated unit (b) to the total unit (b) is 83 % or more.

2. Water-crosslinkable polyolefin piping as claimed in Claim 1, wherein said water-crosslinkable polyolefin (A) is a silane-modified polyolefin obtained by grafting a vinyltrialkoxysilane to polyethylene.

3. Water-crosslinkable polyolefin piping as claimed in Claim 1 or 2, wherein said ethylene copolymer (B) has a melt flow rate of from 0.5 to 20 g/10 min.

4. Water-crosslinkable polyolefin piping as claimed in any of the preceding claims, wherein said vinyl compound unit being present in an amount of from 0.1 to 3 % by weight based on said resin composition.

5. Water-crosslinkable polyolefin piping as claimed in any of the preceding claims, wherein the ratio of unit (b) to the sum of units (a) and (b) is from 0.0005 to 0.85 mol %.

6. Water-crosslinkable polyolefin piping as claimed in any of the preceding claims, wherein said vinyl compound is 4-acryloyloxy-2,2,6,6-tetramethylpiperidine.

## Patentansprüche

1. Wasservernetzbare Polyolefin-Rohrleitung, die erhältlich ist durch Formung einer Harzzusammensetzung, die (A) ein wasservernetzbares Polyolefin und (B) ein Ethylen-Copolymer, das eine Ethylen-Einheit und eine gehinderte aminhaltige Vinyl-Verbindungseinheit umfaßt, und eine Schmelzflußrate von 0,1 bis 200 g/10 min aufweist, umfaßt, worin die Vinyl-Verbindungseinheit in einer Menge von 0,05 bis 5 Gew.-% auf Basis der Harzzusammensetzung vorhanden ist,
dadurch **gekennzeichnet**,
daß das Ethylen-Copolymer (B) eine Copolymer ist, das folgendes umfaßt: (a) eine Ethylen-Einheit und (b) eine Einheit, die abgeleitet ist von einer Vinyl-Verbindung der Formel

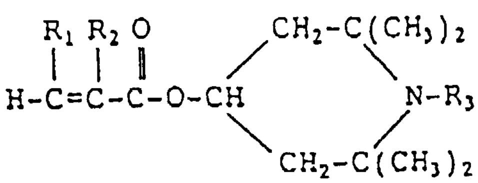

worin $R_1$ und $R_2$ jeweils ein Wasserstoffatom oder eine Methyl-Gruppe repräsentieren, und $R_3$ repräsentiert ein Wasserstoffatom oder eine Alkyl-Gruppe mit 1 bis 4 Kohlenstoffatomen, worin das Verhältnis der Einheit (b) zu der Summe der Einheiten (a) und (b) weniger als 1 Mol.-% beträgt und das Verhältnis der isolierten Einheit (b) zu den gesamten Einheiten (b) ist 83 % oder mehr.

2. Wasservernetzbare Polyolefin-Rohrleitung gemäß Anspruch 1, worin das wasservernetzbare Polyolefin (A) ein Silan-modifiziertes Polyolefin ist, das erhalten wird durch Aufpfropfung von Vinyltrialkoxysilan auf Polyethylen.

3. Wasservernetzbare Polyolefin-Rohrleitung gemäß Anspruch 1 oder 2, worin das Ethylen-Copolymer (B) eine Schmelzflußrate von 0,5 bis 20 g/10 min aufweist.

**4.** Wasservernetzbare Polyolefin-Rohrleitung gemäß mindestens einem der vorhergehenden Ansprüche, worin die Vinyl-Verbindungseinheit in einer Menge von 0,1 bis 3 Gew.-% auf Basis der Harzzusammensetzung vorhanden ist.

**5.** Wasservernetzbare Polyolefin-Rohrleitung gemäß mindestens einem der vorhergehenden Ansprüche, worin das Verhältnis der Einheit (b) zu der Summe der Einheiten (a) und (b) 0,0005 bis 0,85 Mol.-% beträgt.

**6.** Wasservernetzbare Polyolefin-Rohrleitung gemäß mindestens einem der vorhergehenden Ansprüche, worin die Vinyl-Verbindung 4-Acryloyloxy-2,2,6,6-tetramethylpiperidin ist.

**Revendications**

**1.** Tuyau en polyoléfine réticulable par l'eau, pouvant être obtenu par moulage d'une composition de résine comprenant :

(A) une polyoléfine réticulable par l'eau ; et

(B) un copolymère de l'éthylène comprenant des unités d'éthylène et des unités de composé vinylique contenant une amine encombrée et ayant un indice de fusion de 0,1 à 200 g/10 min., lesdites unités de composé vinylique étant présentes dans une quantité de 0,05 à 5% en poids sur la base de ladite composition de résine,

caractérisé par le fait que ledit copolymère de l'éthylène (B) est un copolymère comprenant :

(a) des unités d'éthylène ; et

(b) des unités provenant d'un composé vinylique représenté par la formule :

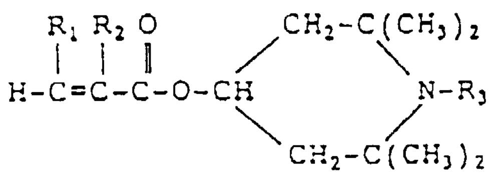

dans laquelle :

- $R_1$ et $R_2$ représentent chacun un atome d'hydrogène ou un groupe méthyle ; et
- $R_3$ représente un atome d'hydrogène ou un groupe alkyle ayant de 1 à 4 atomes de carbone,

dans lequel le rapport des unités (b) à la somme des unités (a) et (b) est inférieur à 1% en moles, et le rapport des unités (b) isolées aux unités (b) totales est de 83% ou davantage.

**2.** Tuyau en polyoléfine réticulable par l'eau, selon la revendication 1, dans lequel ladite polyoléfine réticulable par l'eau (A) est une polyoléfine modifiée par silane, obtenue par greffage d'un vinyltrialcoxysilane sur le polyéthylène.

**3.** Tuyau en polyoléfine réticulable par l'eau, selon l'une des revendications 1 ou 2, dans lequel ledit copolymère de l'éthylène (B) a un indice de fusion de 0,5 à 20 g/10 min.

**4.** Tuyau en polyoléfine réticulable par l'eau, selon l'une quelconque des revendications précédentes, dans lequel lesdites unités de composé vinylique sont présentes dans une quantité de 0,1 à 3% en poids sur la base de ladite composition de résine.

**5.** Tuyau en polyoléfine réticulable par l'eau, selon l'une quelconque des revendications précédentes, dans lequel le rapport des unités (b) à la somme des unités (a) et (b) est de 0,0005 à 0,85% en moles.

**6.** Tuyau en polyoléfine réticulable par l'eau, selon l'une quelconque des revendications précédentes, dans lequel ledit composé vinylique est la 4-acryloyloxy-2,2,6,6-tétraméthylpipéridine.